**Europäisches Patentamt**

(19) **European Patent Office**

**Office européen des brevets** ·

(11) Numéro de publication: **0 133 126 B1**

(12) # FASCICULE DE BREVET EUROPÉEN

(45) Date de publication du fascicule du brevet: **04.11.87**

(51) Int. Cl.⁴: **G 01 D 5/20**, G 01 L 3/10

(21) Numéro de dépôt: **84401559.4**

(22) Date de dépôt: **25.07.84**

(54) Capteur de déplacement angulaire, notamment pour la détection du couple dans les directions assistées.

(30) Priorité: 29.07.83 FR 8312511

(43) Date de publication de la demande: **13.02.85 Bulletin 85/7**

(45) Mention de la délivrance du brevet: **04.11.87 Bulletin 87/45**

(84) Etats contractants désignés: **DE FR GB IT NL SE**

(56) Documents cité:
DE-A-2 409 043
FR-A-1 427 243
FR-A-2 381 284
GB-A-2 065 897
US-A-2 867 783
US-A-2 921 280
US-A-3 431 525

(73) Titulaire: **REGIE NATIONALE DES USINES RENAULT, Boîte postale 103 8-10 avenue Emile Zola, F-92109 Boulogne- Billancourt (FR)**

(72) Inventeur: **Lombard, Claude, 60, rue Corneille, 78150 F-Le Chesnay (FR)**
Inventeur: **Brisset, Jean- Paul, 3 bis, Square du Gasselet, F-94320 Thiais (FR)**
Inventeur: **Catier, Gérard, 26, rue Emile- Duployé, F-92130 Issy Les Moulineaux (FR)**
Inventeur: **Marais, Jean- Luc, 26, rue Philippe- Triaire, F92000 Nanterre (FR)**
Inventeur: **Zammarchi, Gino, 39, rue A. Renoir Immeuble 6 Appartement 683, F78400 Chatou (FR)**

## Description

La présente invention a pour objet un capteur de déplacement angulaire applicable notamment à la détection du couple exercé par le conducteur sur le volant d'un véhicule automobile muni d'une direction assistée.

Cette détection de couple, sur les véhicules actuellement fabriqués, est obtenue en insérant un arbre de torsion entre le volant et l'arbre de direction, ce qui permet le dégagement de lumières dans une valve hydraulique rotative. Les variations obtenues en sortie de la valve pilotent un vérin lié à la barre de direction.

Cette technique s'est avérée très fiable et relativement satisfaisante, mais l'assistance fournie par ce type de direction est trop élevée lorsque le véhicule roule à une vitesse appréciable. Il existe des dispositifs entièrement hydrauliques qui permettent de corriger ce défaut, mais ces dispositifs de correction augmentent encore le prix du produit.

Une solution à ce problème consiste à recourir à des capteurs permettant de mesurer relativement précisément le couple exercé par le conducteur sur le volant et à moduler l'assistance fournie en fonction du couple mesuré et de la vitesse du véhicule. L'assistance peut être fournie soit par des moyens hydrauliques, soit par des moyens électriques. DE-A-2 409 043 décrit un transformateur tournant et signale l'utilisation de transformateurs de ce type dans des dispositifs de mesure de couple.

La demande de brevet FR-A-2 472 174 décrit une installation pour mesurer sans contact un angle de rotation et/ou un couple sur un arbre fixe ou en rotation. Cette installation comprend deux disques d'induction coaxiaux identiques pourvus d'échancrures en forme de secteurs et susceptibles de tourner l'un par rapport à l'autre. A ces deux disques est associée une, ou de préférence, deux bobines également en forme de disques et parcourues par un courant alternatif à haute fréquence. La ou les bobines induisent dans les disques des courants de Foucault dont l'intensité est fonction de leur position angulaire relative, courants qui eux-mêmes influencent l'inductance de la ou des bobines. En exploitant cette variation d'inductance par des moyens connus, on obtient une image de la position angulaire relative des deux disques. Une telle installation peut être ainsi appliquée à la mesure de couple, notamment pour une direction assistée, en rendant l'un des disques solidaires du volant et l'autre de l'arbre de torsion interposé entre le volant et l'arbre de direction.

Cette installation présente toutefois l'inconvénient de ne pas permettre la reconnaissance du sens de la déviation angulaire mesurée et de ne pas posséder de vrai zéro physique.

La présente invention vise à fournir un capteur de déplacement angulaire particulièrement adapté à la détection du couple sur des pièces tournantes, notamment du couple exercé par un conducteur sur la colonne de direction d'un véhicule automobile, et qui permette d'éviter les inconvénients précités de l'installation décrite dans la demande de brevet FR 2 472 174.

A cet effet, l'invention a pour objet, selon une première réalisation, un capteur de déplacement angulaire et/ou de couple sans contact comprenant deux disques de détection coaxiaux susceptibles de tourner l'un par rapport à l'autre d'un angle à détecter et portant sur leurs faces en regard des bobines de détection planes en forme de secteurs spiralés bobinées alternativement dans un sens et dans l'autre et dont la mutuelle induction varie en fonction de la position angulaire relative des disques de détection, caractérisé en ce qu'il comprend de plus un premier transformateur tournant dont le primaire fixe est connecté électriquement à deux conducteur, d'alimentation et dont le secondaire est connecté électriquement à l'un des disques de détection et un second transformateur tournant dont le primaire est connecté électriquement à l'autre disque de détection et dont le secondaire est connecté électriquement par deux conducteurs à un circuit électronique de traitement du signal recueilli.

Selon une seconde réalisation conforme à l'invention, le capteur de déplacement comporte un transformateur tournant unique dont le primaire est connecté électricement à un circuit électronique assurant l'alimentation du transformateur tournant et le traitement de l'information recueillie sous forme de variations de la mutuelle inductance M entre les deux disques de détection ou de variations de phase entre le courant et la tension existant dans le primaire; et dont le secondaire est connecté électriquement à l'un des disques de détection.

Un exemple de réalisation de l'invention sera maintenant décrit en ce référant aux dessin, annexés et sur lesquels :

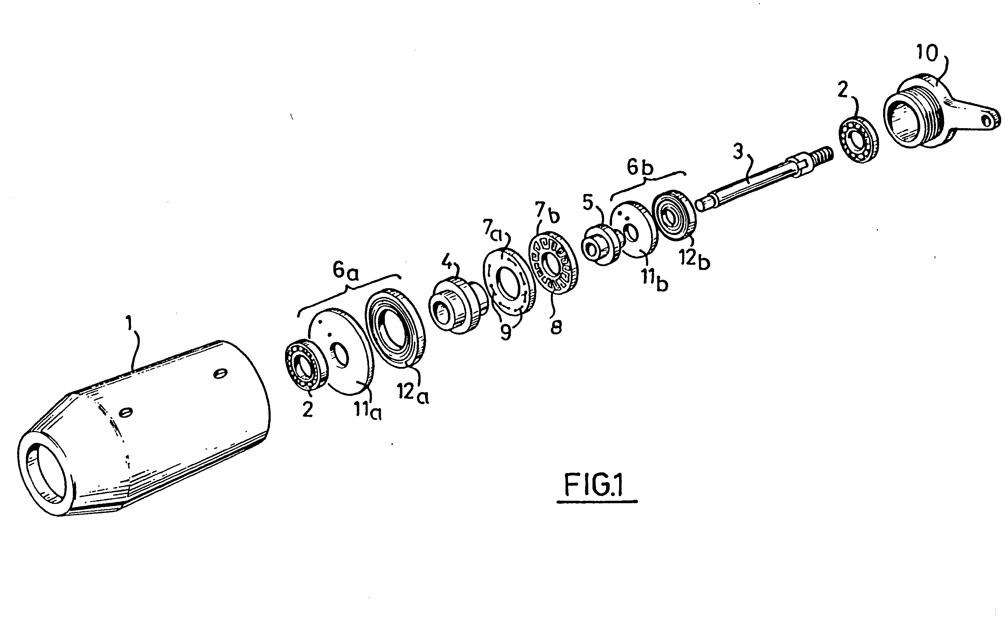

- la figure 1 est une vue en perspective éclatée d'un capteur selon un mode de réalisation de l'invention ;
- la figure 2 est une vue en coupe longitudinale du capteur de la figure 1 ;
- la figure 3A est une vue de la face avant d'un disque support sur lequel sont représentées des bobines de détection ;
- la figure 3B est une vue de la face arrière du disque support sur lequel sont représentés les contacts de raccordement des bobines de détection ;
- les figures 4A et 4B représentent respectivement une vue de la face avant et de la face arrière d'un disque support constituant un transformateur tournant ;
- la figure 5 est une vue en coupe longitudinale d'une variante de réalisation du capteur selon l'invention ;
- la figure 6 est un schéma électrique équivalent d'un capteur selon l'invention associé à un circuit d'exploitation;
- la figure 7 est une vue en coupe longitudinale d'une variante de réalisation du capteur selon l'invention mécaniquement simplifiée par rapport à la figure 2 et plus performante électriquement ;

- la figure 7A est une demi-vue en coupe longitudinale des disques supports de cette variante, à échelle agrandie ;

- la figure 8A représente les faces avant et arrière identiques de disques supports 27 et 28 de la figure 7A, comportant un bobinage de transformateur tournant et des connexions de mise en série des bobines de détection situées sur l'autre face de ces disques ;

- la figure 8B représente une couche interne du disque support 28 de la figure 7A constituant une plaque métallique servant d'écran électromagnétique ;

- la figure 8C représente les faces arrière et avant identiques des disques supports 27 et 28 de la figure 7A comportant les bobines de détection;

- les figures 9A et 9B représentent respectivement les faces avant et arrière des disques supports 20A et 20B de la figure 7A constituant chacun un transformateur tournant ; et

- la figure 9C représente une couche interne du disque support 27 de la figure 7A constituant la deuxième partie du bobinage secondaire d'un transformateur tournant élévateur de tension.

En se reportant aux figure, 1 et 2, le capteur représenté comprend une enveloppe protectrice fixe constituée de deux parties tubulaires 1 et 10 vissées l'une avec l'autre et montée sur un arbre de torsion 3 par l'intermédiaire de deux roulements à bille 2. L'arbre de torsion 3 est donc libre en rotation par rapport a l'enveloppe protectrice 1, 10.

Des bagues 4 et 5, solidaire, chacune de l'une des extrémite, de l'arbre de torsion 3, sont susceptibles de tourner relativement l'une par rapport à l'autre sous l'effet de la torsion de l'arbre 3.

Des disques identiques de détection 7a et 7b présentant des bobines planes en regard, 8, sont fixé, respectivement sur les bague, 4 et 5. Les disques 7a et 7b sont en matériau isolant et présentent sur l'une de leurs faces lesdites bobines 8 régulièrement reparties et sur leur autre face des contacte 9 de raccordement connectés électriquement aux bobines par des trous prévus dans l'épaisseur des disques et présentant une métallisation. Des disques de détection similaires sont décrits également dans la demande de brevet français 2 381 284.

Aux disques 7a et 7b sont associés respectivement des transformateurs tournants 6a et 6b comprenant, le premier 6a, deux disques bobinés identiques 11a et 12a, le second 6b, également deux disques bobinés identiques 11b et 12b. Le disque 11a constituant le primaire du premier transformateur 6a est fixé à l'enveloppe 1, 10 tandis que son secondaire 12a est solidaire en rotation de la bague 4. De manière similaire, le disque 11b constituant le primaire du second transformateur 6b est solidaire en rotation de la bague 5 tandis que son secondaire 12b est fixé à l'enveloppe 1, 10.

Les figure, 3A et 3B représentent plus en détails respectivement les faces bobinées et pourvues de contacts de raccordement des disques identiques 7a et 7b. Les bobines 8, en nombre pair, sont bobinées respectivement les unes après les autres en sens inverse et peuvent prendre la forme de secteurs spiralés. Ainsi, la surface de recouvrement mutuelle des secteurs spiralés bobinés sur les disques 7a et 7b respectivement se modifie quand ces derniers tournent l'un par rapport à l'autre.

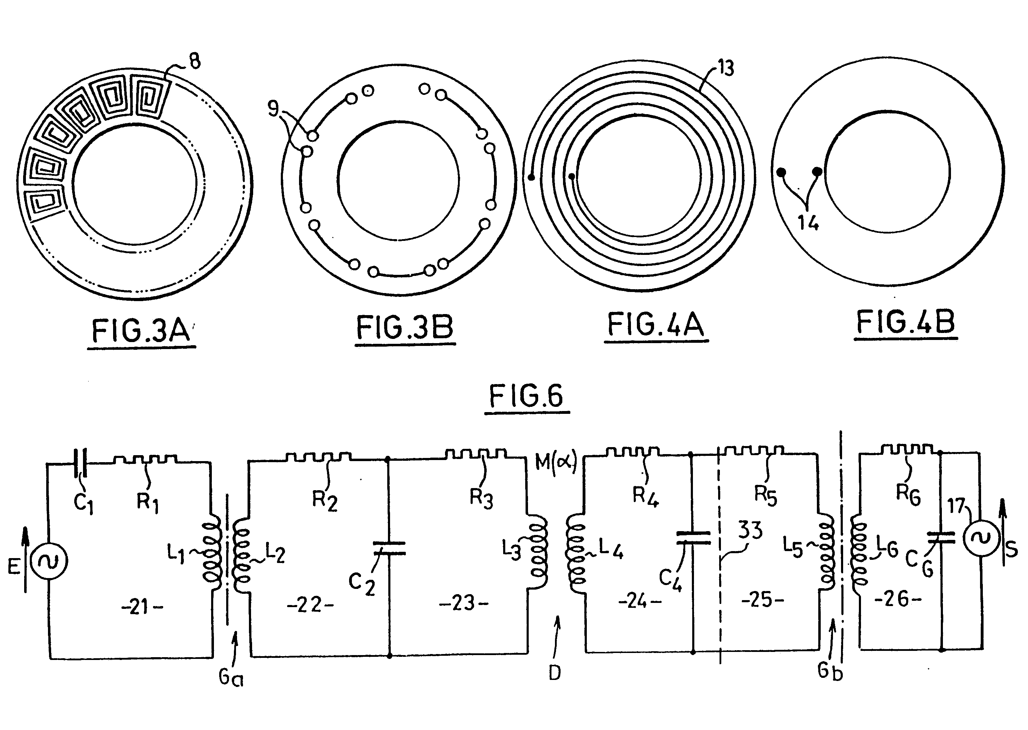

De même, les figures 4a et 4B montrent respectivement les faces bobinées et pourvues de contacts de raccordement des disques identiques 11a 12a, 11b et 12b formant les deux transformateurs tournants. Ces disques sont réalisés en matériau électriquement isolant et sont couplés deux à deux par la mutuelle induction due à leurs bobinages en regard, 13, présentant la forme d'une spirale ou de cercles concentriques à l'axe de rotation de l'arbre de torsion 3. L'autre face des disques 11a, 12a, 11b, 12b présente des contacts de raccordement 14 connectés électriquement aux bobinages 13 par des trous prévue dans l'épaisseur des disques et présentant une métallisation.

Les disques 12a et 7a sont connectés électriquement l'un avec l'autre par l'intermédiaire de leurs contacts de raccordement 14 et 9 et il en va de même pour les disques 7b et 11b.

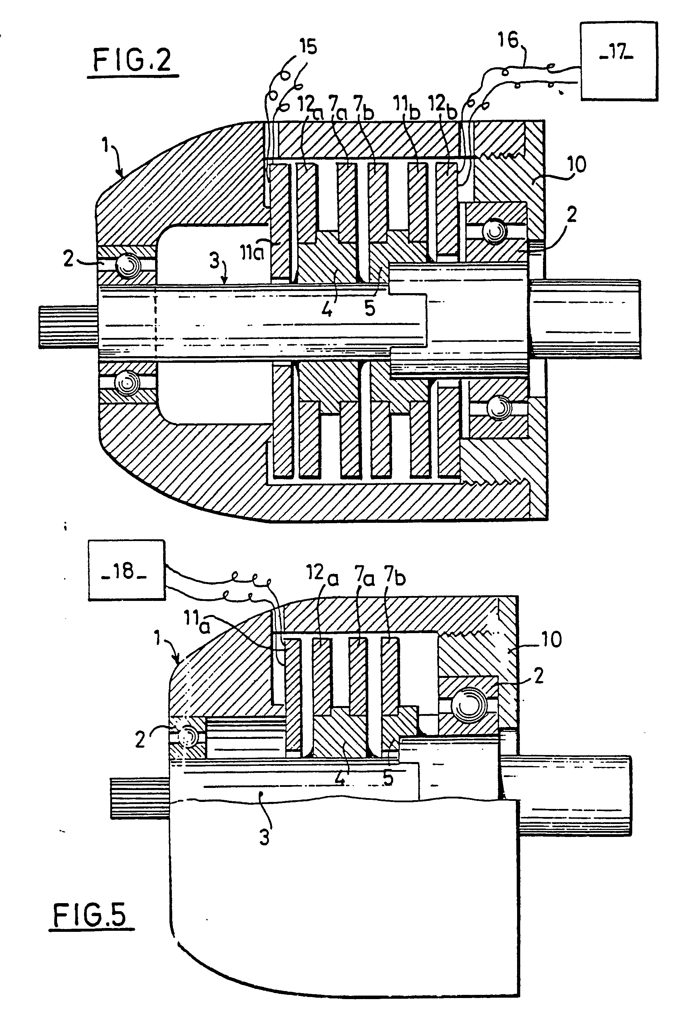

Enfin, en se reportant à nouveau à la figure 2, le disque 11a est connecté électriquement à deux conducteurs d'alimentation 15 et le disque 12b par deux conducteurs 16 à un circuit électronique 17 de traitement du signal recueilli au secondaire 12b du transformateur 6b.

En fonctionnement, le primaire fixe 11a du transformateur 6a, auquel est appliqué un signal haute fréquence E par les conducteurs 15, engendre dans le bobinage du secondaire tournant 12a une force électromotrice d'induction qui est indépendante de la rotation du disque 12a grâce à la symétrie des bobinages des disque, 11a et 12a. De même, le disque primaire 7a, alimenté par le secondaire 12a du transformateur 6a, engendre dans le disque secondaire 7b une force électromotrice d'inductions qui, elle, est d'autant plus élevée que les surfaces des bobines du disque secondaire 7b recouvrent plus complètement celles des bobine, du disque primaire 7a. Cette force électromotrice est recueillie par l'intermédiaire du transformateur 6b sur les conducteurs 16 qui l'appliquent au circuit électronique 17. Celui-ci, de type connu, effectue un traitement approprié pour fournir un signal représentatif du décalage angulaire entre les disques 7a et 7b ou, par un étalonnage approprié, du couple exercé sur l'arbre de torsion 3.

Le schéma électrique équivalent de 1a figure 6 permet de mieux expliciter ce ronctionnement. Sur cette figure, les inductances des différents bobinages ont été représentées sous forme d'une resistance pure associée en série à une inductance pure. Le circuit électronique fournissant le signal haute fréquence E est reccordé à un circuit oscillant 21 constitué d'une capacité $C_1$, d'une résistance $R_1$ et d'une inductance $L_1$ représentant le primaire 11a du transformateur 6a. Ce signal est transmis par le transformateur tournant 6a aux circuit, 22, 23, 24 et 25 qui sont libres en rotation et dans lesquels les inductance, $L_2$, $L_3$, $L_4$ et $L_5$ et les résistances associée, correspond entaux bobinages des disques 12a, 7a, 7b et 11b respectivement.

Le dispositif de détection D, représenté par les inductance, $L_3$ et $L_4$ (disques 7a et 7b), module l'amplitude du signal reçu en fonction de l'écart angulaire $\alpha$ existant entre les deux disques 7a et 7b. Ce signal haute fréquence modulé en amplitude S est récupéré, via le transformateur tornant 6b, aux bornes de la capacité $C_6$ par le circuit électronique 17 de type connu qui peut être, par exemple, un démodulateur synchrone ou un détecteur de crête à diodes associé à un détecteur de phase.

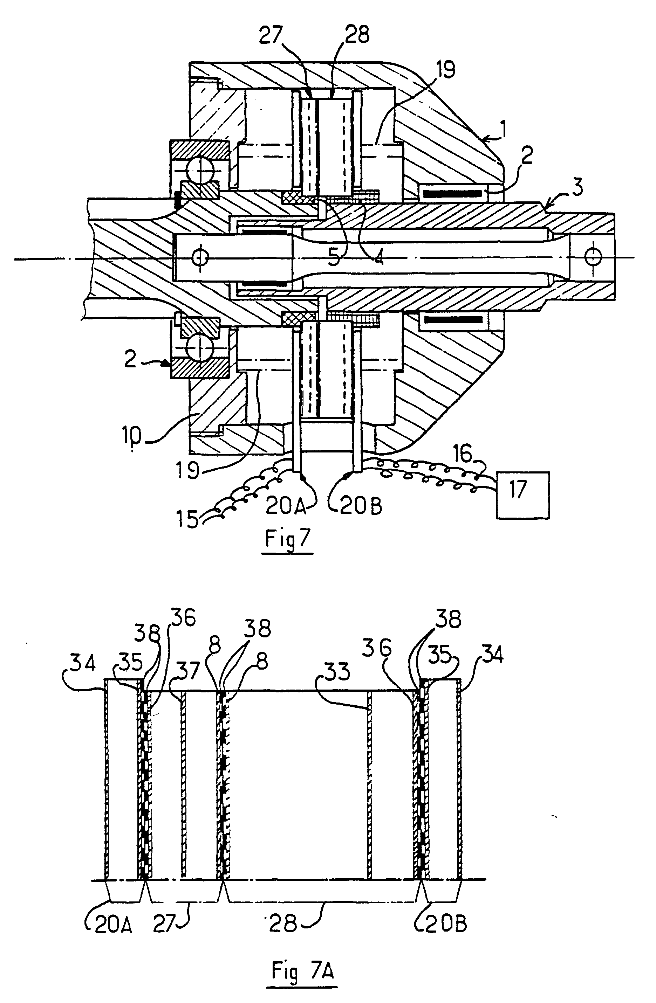

Les condensateurs rapporté, C2 et C4, qui doivent être à l'intérieur des disques tournants, ne sont pas indispensables, notamment dans le cas de la figure 7 ou la distance entre disques support est réduite. Cette réduction augmente le couplage parasite entre les transformateurs tournants. Ce défaut peut être supprimé par l'introduction d'un écran électromagnétique 33 situé entre les circuit, 24 et 25. La suppression des condensateurs C2 et C4 simplifie la réalisation industrielle du produit.

La figure 5 représente une variante de realisation qui diffère de celle de la figure 2 par la suppression du second transformateur tournant 6b. Le primaire 11a est alors connecté électriquement à un circuit électronique 18 permettant de détecter les variations de la mutuelle induction M entre les disques 7a et 7b ou les variations de phase entre le courant et la tension existant dans le primaire 11a. Au niveau de la figure 6, cette suppression du transformateur 6b se traduit par celle des composants $R_5$, $L_5$, $L_6$, $R_6$ et $C_6$.

Le circuit électronique 18 assurant l'alimentation du dispositif et le traitement de l'information recueillie est de type connu et peut être constitué par un oscillateur permettant de transformer une variation d'impédance en variation de fréquence autour d'une fréquence porteuse fo, ou bien un détecteur de phase comparant les variations de phase du courant à celles de la tension prise comme référence.

La figure 7 est une variante de réalisation du capteur décrit à la figure 2 dans laquelle le nombre des pièces à monter lors de l'assemblage à été réduit de 6 à 4 avec, en outre, l'avantage de réduire les dispersions du signal électrique de sortie en fonction des tolérances mécaniques des supports. Accesoirement, l'amplitude du signal électrique a été augmentée en multipliant le nombre de spires au secondaire des transformateur, tournant, qui deviennent ainsi élévateurs de tension, en utilisant la technique des circuits imprimé, multicouches à trous métalisées. Il a été possible dans ce type de construction de placer un écran électromagnétique dans le disque support récepteur 28.

Sur cette figure les pièces referées 1, 2, 3, 4, 5, 10, 15, 16, 17 sont sans changement notable par rapport a la figure 2.

Le disque support 20A constitue la partie fixe du transformateur tournant d'entrée. Il porte sur sa face externe les connexions 34 de la figure 9A et sur sa face interne le bobinage imprimé 35 de la figure 9B.

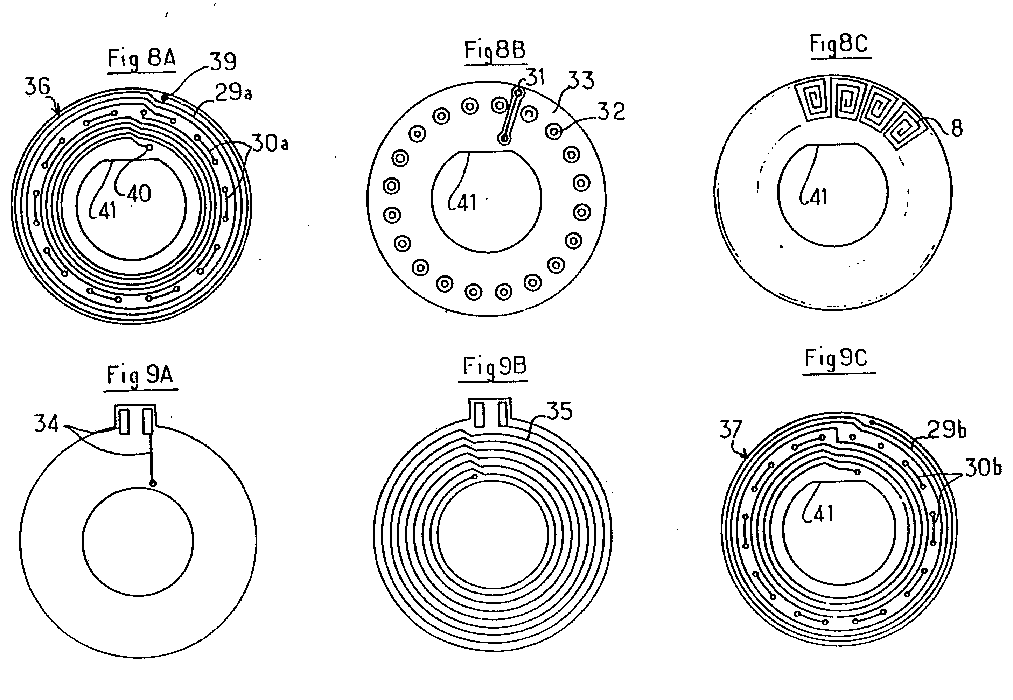

Le disque support détecteur 27 solidaire de la bague 5 porte sur sa face en regard du disque 20A le motif 36 de la figure 8A qui est composé d'une part de spires 29a constituant la première partie de l'enroulement secondaire du transformateur tournant d'entrée et d'autre part de connexions 30a de mise en série des bobines de détection 8 (Figure 8C) situées sur son autre face. Le disque support 27 comporte une couche interne 37 visible sur les figures 9C et 7A constituant la deuxième partie de l'enroulement secondaire élévateur du transformateur d'entrée. Le motif de cet enroulement identique à celui de la figure 8A inclut des spires 29b en série avec celles référencées 29a et des interconnexions 30b en parallèles avec celles referencées 30a à la figure 8A.

Le disque support 28 porte sur sa face en regard du disque 27 les bobines de détection 8 représentées figure 8C et sur son autre face en regard du disque 20B le motif 36 de la figure 8A comprenant des spires 29a constituant le primaire de l'enroulement du transformateur de sortie d'une part et des interconnexions 30a de mise en serie des bobine, de détection 8 d'autre part.

Ce disque support 28 inclut une couche interne conductrice 33 représentée figure 8B et 7A jouant le rôle d'un écran électromagnétique reduisant le flux direct entre les transformateurs d'entrée et de sortie (6a et 6b figure 6).

Cette couche 33 est découpée de manière à laisser passer une connexion 31 qui assure la continuité électrique de l'entrée 39 et de la sortie 40 du bobinage 29 a de l'enroulement 36 qui est alimenté en son milieu par les bobines de détection 8.

Le disque support 20B qui constitue la partie fixe du transformateur tournant de sortie inclut les mêmes motifs 34 et 35 sur ses faces que la partie fixe 20A du transformateur tournant d'entrée.

Des couches 38 électriquement isolantes et présentant de bonnes propriétés mécaniques de frottement sont interposées entre les disques support 20A, 27, 28, 20B ainsi qu'il est indique sur 1a figure 7A. Ces couches en nombre quelconque peuvent être indépendantes ou collées sur les disques support. Elles peuvent être a base de polytétrafluoréthylène ou d'un matériau similaire moins fluoré ou encore en polyéthylène a haut poids moléculaire.

Il est donc possible de faire frotter sans usure et avec un faible couple les disques support 20A, 27, 28, 20B les uns sur les autres et donc d'éviter des entrefers parasites variables entre les enroulements principalement dûs aux tolérances mécaniques des pièces.

Deux ressorts de faible force 19 de part et d'autre des parties 20A et 20B des transformateurs tournants permettent le maintien au contact des différentes pièces.

Les disques supports 27, 28 peuvent être immobilisés en rotation sur les bagues 4 et 5 par des plats 41 ménagés dans leur trou central.

Chaque capteur qui vient d'être décrit peut être appliqué à la mesure de déplacements angulaires sans contact, mais il est particulièrement adapté à la mesure de déplacements symétriques par rapport a une position initiale dont la définition électrique ne varie pas. Chaque capteur peut en effet présenter des variations de sensibilité, mais la position repère du zéro ne varie pas, ce qui est hautement souhaitable dans le cas de la mesure du couple pour une direction assistée de véhicule automobile. En outre, chaque capteur permet de détecter le sens de déviation angulaire car, en raison du bobinage alternativement dans un sens et dans l'autre des bobines 8, des déviations angulaires de sens opposés se traduisent par des variations de signes opposés du signal recueilli.

**Revendications**

1. Capteur de déplacement angulaire et/ou de couple sans contact comprenant deux disques de détection coaxiaux électriquement isolants (7a, 7b) susceptibles de tourner l'un par rapport à l'autre d'un angle à détecter et portant sur leurs faces en regard des bobines de détection planes conductrices (8) en forme de secteurs spiralés bobinées alternativement dans un sens et dans l'autre et dont la mutuelle induction varie en fonction de la position angulaire relative des disques de détection (7a, 7b), caractérisé en ce qu'il comprend de plus un premier transformateur tournant (6a) dont le primaire fixe (11a) est connecté électriquement à deux conducteurs d'alimentation (15) et dont le secondaire (12a) est connecté électriquement à l'un des disques de détection (7a) et un second transformateur tournant (6b) dont le primaire (11b) est connecté électriquement à l'autre disque de détection (7b) et dont le secondaire (12b) est connecté électriquement par deux conducteurs (16) à un circuit électronique (17) de traitement du signal (5) recueilli.

2. Capteur de déplacement angulaire et/ou de couple sans contact comprenant deux disques de détection coaxiaux électriquement isolants (7a, 7b) susceptibles de tourner l'un par rapport à l'autre d'un angle à détecter et portant sur leurs faces en regard des bobines planes conductrices (8) en forme de secteurs spiralés bobinées alternativement dans un sens et dans l'autre et dont la mutuelle induction varie en fonction de la position angulaire relative des disques de détection (7a, 7b), caractérisé en ce qu'il comprend de plus un transformateur tournant unique (6a) dont le primaire (11a) est connecté électriquement à un circuit électronique (18) assurant l'alimentation du transformateur tournant (6a) et le traitement de l'information recueillie sous forme de variations de la mutuelle inductance M entre les deux disques de détection (7a, 7b) ou de variations de phase entre le courant et la tension existant dans le primaire (11a); et dont le secondaire (12a) est connecté électriquement à l'un (7a) des disques de détection.

3. Capteur selon l'une des revendications 1 et 2, caractérisé en ce que chaque transformateur tournant (6a, 6b) est constitué de deux disques identiques électriquement isolants (11a, 12a, 11b, 12b) présentant sur leurs faces en regard des bobinages (13) circulaires ou en spirales concentriques à l'axe desdits disques (11a, 12a, 11b, 12b).

4. Capteur selon la revendication 3 caractérisé en ce que les disques de détection et ceux des transformateurs tournants (7a, 7b, 11a, 11b, 12a, 12b) présentent, sur leurs faces opposées à celles partant des bobines ou des bobinages (8, 13), des contacts de raccordement (9, 14) connectés électriquement à ces derniers par l'intermediaire de trous s'étendant dans l'épaisseur des disques et pourvus de métallisation.

5. Capteur selon l'une quelconque des revendications 3 et 4, caractérisé en ce que lesdits disques de détection (7a, 7b) présentent sur l'une de leurs faces lesdites bobines (8) de détection en forme de secteurs spiralés et sur leur autre face l'un desdits bobinages (13) circulaires ou en forme de spirale constituant un primaire ou un secondaire de transformateur tournant.

6. Capteur selon l'une quelconque des revendications 1 à 5 , caractérisé en ce que les différents disques (20A, 20B, 27, 28) portant les bobines de détection et le ou les bobinages de transformateur frottent les uns sur les autres avec interposition de films (38) électriquement isolants et présentant de bonnes qualités mécaniques de frottement.

7. Capteur selon la revendication 6, caractérisé en ce que le film de frottement (38) est un matériau à base de polytétrafluoréthylène ou d'un matériau similaire moins fluoré.

8. Capteur selon la revendication 7, caractérisé en ce que le film de frottement est un matériau à base de polyéthylène à haut poide moléculaire.

9. Capteur selon l'une quelconque des revendication, 1 à 8, caractérisé en ce qu'il est prévu au moins un écran électromagnétique (33) entre les transformateurs tournants.

10. Capteur selon la revendication 9, caractérisé en ce que l'écran électromagnétique (33) est constitué par une couche intermédiaire de l'un (28) des disques de détection réalisé en circuit imprimé multicouches.

11. Capteur selon l'une quelconque des revendications 1 à 10, caractérisé en ce que l'un au moins des transformateurs tournant, (20A, 27, 28, 20B) est de type élévateur de tension.

12. Capteur selon la revendication 11, caractérisé en ce que le transformateur élévateur de tension (20A, 27) comprend un enroulement secondaire constitué par la mise en série d'un premier bobinage (29 a) porté par l'une des faces d'un disque (27) et d'un second bobinage (29 b) constitué par une couche intermédiaire (37) du même disque réalisé en circuit imprimé multicouches.

13. Capteur selon l'une quelconque des revendications 1 à 12, caractérisé en ce que les connexions de mise en série des bobines de détection (30A, 30B) sont placées sur une des faces des disques de détection (27, 28) présentant un bobinage (29A, 29B) constituant un enroulement de transformateur tournant.

## Patentansprüche

1. Fühler zum berührungslosen Messen des Drehwinkels und/oder des Momentes mit zwei elektrisch isolierenden koaxialen Meßscheiben (7a, 7b), die sich relativ zueinander um den zu messenden Winkel verdrehen können und die auf ihren sich gegenüberliegenden Flächen ebene, leitende Meßspulen (8) in Form spiralförmiger Abschnitte aufweisen, die abwechselnd in beiden Richtungen gewickelt sind und deren gegenseitige Induktion als Funktion der relativen Winkelstellung der Menscheiben (7a, 7b) variiert, dadurch gekennzeichnet, daß er außerdem einen ersten sich drehenden Transformator (6a) aufweist, dessen feststehende Primärwicklung (11a) elektrisch mit zwei Versorgungsleitungen (15) verbunden ist und dessen Sekundärwicklung (12a) elektrisch mit einer der Meßscheiben (7a) verbunden ist und einen zweiten sich drehenden Transformator (6b) aufweist, dessen Primärwicklung (11b) elektrisch mit der anderen Meßscheibe (7b) verbunden ist und dessen Sekundärwicklung (12b) elektrisch über zwei Leitungen (16) mit einem elektronischen Verarbeitungsschaltkreis (17) für das abgenommene Signal (S) verbunden ist.

2. Fühler zum berührungslosen Messen des Drehwinkels und/oder des Momentes, mit zwei elektrisch isolierenden Meßscheiben (7a, 7b), die sich relativ zueinander um den zu messenden Winkel verdrehen können und die auf ihren sich gegenüberliegenden Flächen ebene, leitende Meßspulen (8) in Form spiralförmiger Abschnitte aufweisen, die abwechselnd in beiden Richtungen gewickelt sind und deren gegenseitige Induktion als Funktion der relativen Winkelstellung der Meßscheiben (7a, 7b) variiert, dadurch gekennzeichnet, daß er außerdem einen einzigen sich drehenden Transformator (6a) aufweist, dessen Primärwicklung (11a) elektrisch mit einem elektronischen Schaltkreis (18) verbunden ist zur Versorgung des sich drehenden Transformators (6a) und zur Verarbeitung der empfangenen Information in Form von Veränderungen der gegenseitigen Induktion (M) zwischen den beiden Meßscheiben (7a, 7b) oder in Form von Phasenvariationen zwischen dem Strom und der Spannung in der Primärwicklung (11a), wobei seine Sekundärwicklung (12a) elektrisch mit einer der Meßscheiben (7a) verbunden ist.

3. Fühler nach einem der Ansprüche 1 und 2, dadurch gekennzeichnet, daß jeder sich drehende Transformator (6a, 6b) aus zwei identischen elektrisch isolierenden Scheiben (11a, 12a, 11b, 12b) besteht, die auf ihren sich gegenüberliegenden Flächen kreisförmige oder zur Achse der Scheiben (11a, 12a, 11b, 12b) konzentrische spiralförmige Spulen (13) aufweisen.

4. Fühler nach Anspruch 3, dadurch gekennzeichnet, daß die Meßscheiben und diejenigen der sich drehenden Transformatoren (7a, 7b, 11a, 11b, 12a, 12b) auf ihren den Spulen (8, 13) gegenüberliegenden Flächen Verbindungsanschlüsse (9, 14) aufweisen, die elektrisch mit letzteren verbunden sind mit Hilfe von Öffnungen, die sich durch die Scheibendicken erstrecken und die metallisiert sind.

5. Fühler nach einem der Ansprüche 3 und 4, dadurch gekennzeichnet, daß die Meßscheiben (7a, 7b) auf einer ihrer Flächen die genannten Meßspulen (8) in Form von spiralförmigen Abschnitten aufweisen und auf ihren anderen Flächen eine der kreisförmigen oder spiralförmigen Spulen (13) aufweisen, die die Primärwicklung oder die Sekundärwicklung der sich drehenden Transformatoren bilden.

6. Fühler nach einem der Ansprüche 1 bis 5, dadurch gekennzeichnet, daß die verschiedenen Scheiben (20A, 20B, 27, 28), die die Meßspulen und die Transformatorspule oder Transformatorspulen aufweisen, gegeneinander reiben unter Zwischenschaltung von elektrisch isolierenden Filmen (38) und dabei gute mechanische Reibungsqualitäten aufweisen.

7. Fühler nach Anspruch 6, dadurch gekennzeichnet, daß der Reibungsfilm (38) aus einem Material auf Basis von Polytetrafluorethylen oder eines ähnlichen Materials mit geringerem Fluorgehalt besteht.

8. Fühler nach Anspruch 7, dadurch gekennzeichnet, daß der Reibungsfilm aus einem Material auf der Grundlage von Polyethylen mit hohem Molekulargewicht besteht.

9. Fühler nach einem der Ansprüche 1 bis 8, dadurch gekennzeichnet, daß er wenigstens mit einem elektromagnetischen Schirm (33) zwischen den sich drehenden Transformatoren versehen ist.

10. Fühler nach Anspruch 9, dadurch gekennzeichnet, daß der elektromagnetische Schirm (33) aus einer Zwischenschicht einer der Meßscheiben (28) besteht, die aus einer gedruckten Mehrschichtschaltung gefertigt ist.

11. Fühler nach einem der Ansprüche 1 bis 10, dadurch gekennzeichnet, daß wenigstens einer der sich drehenden Transformatoren (20A, 27, 28, 20B) ein spannungserhöhender Transformator ist.

12. Fühler nach Anspruch 11, dadurch gekennzeichnet, daß der spannungserhöhende Transformator (20A, 27) eine Sekundärwicklung aufweist, die aus der Serienschaltung einer ersten von einer der Flächen der Scheibe (27) getragenen Spule (29a) mit einer zweiten Spule (29b) besteht, die durch eine Zwischenschicht (37) der gleichen Scheibe gebildet ist und aus einer gedruckten Mehrschichtschaltung gefertigt ist.

13. Fühler nach einem der Ansprüche 1 bis 12, dadurch gekennzeichnet, daß die Verbindungen der Serienschaltung der Meßspulen (30A, 30B) auf einer der Flächen der Meßscheiben (27, 28) angeordnet sind und eine Spule (29A, 29B) aufweisen, die aus der Wicklung eines sich drehenden Transformators besteht.

**Claims**

1. A pick-up for detecting angular displacement and/or torque without contact, comprising two coaxial electrically insulating detection discs (7a, 7b) which are capable of turning relative to each other through an angle to be detected and carrying on their facing faces, flat conducting detection coils (8) in the form of spiral sectors, which coils are wound alternately in one direction and the other and the mutual induction of which varies in dependence on the relative angular position of the detection discs (7a, 7b), characterised in that it further comprises a first rotary transformer (6a) in which the fixed primary winding (11a) is electrically connected to two feed conductors (15) and the secondary winding (12a) is electrically connected to one of the detection discs (7a), and a second rotary transformer (6b) in which the primary winding (11b) is electrically connected to the other detection disc (7b) and the secondary winding (12b) is electrically connected by two conductors (16) to an electronic circuit (17) for processing the collected signal (S).

2. A pick-up for detecting angular displacement and/or torque without contact, comprising two coaxial electrically insulating detection discs (7a, 7b) which are capable of turning relative to each other through an angle to be detected and carrying on their facing faces, flat conducting coils (8) in the form of spiral sectors, which coils are wound alternately in one direction and the other and the mutual induction of which varies in dependence on the relative angular position of the detection discs (7a, 7b), characterised in that it further comprises a single rotary transformer (6a) in which the primary winding (11a) is electrically connected to an electronic circuit (18) providing the feed for the rotary transformer (6a) and processing of the information collected in the form of variations in the mutual inductance M between the two detection discs (7a, 7b) or phase variations between the current and the voltage in the primary winding (11a); and in which the secondary winding (12a) is electrically connected to one (7a) of the detection discs.

3. A pick-up according to one of claims 1 and 2 characterised in that each rotary transformer (6a, 6b) is formed by two identical electrically insulating discs (11a, 12a, 11b, 12b) provided on their facing faces with windings (13) of a circular configuration or a spiral configuration, concentric with the axis of said discs (11a, 12a, 11b, 12b).

4. A pick-up according to claim 3 characterised in that the detection discs and the discs of the rotary transformers (7a, 7b, 11a, 11b, 12a, 12b), on their faces opposite to those bearing coils or windings (8, 13), have connecting contacts (9, 14) electrically connected to the latter by way of holes extending through the thickness of the discs and provided with metallisation means.

5. A pick-up according to either one of claims 3 and 4 characterised in that said detection discs (7a, 7b) are provided on one of their faces with said detection coils (8) in the form of spiral sectors while on their other face they are provided with one of said windings (13) which are circular or of a spiral form, constituting a rotary transformer primary winding or secondary winding.

6. A pick-up according to any one of claims 1 to 5 characterised in that the different discs (20A, 20B, 27, 28) carrying the detection coils and the transformer winding or windings rub against each other with the interposition of electrically insulating films (38) having good mechanical frictional qualities.

7. A pick-up according to claim 6 characterised in that the frictional film (38) is a material based on polytetrafluoroethylene or a similar material containing less fluorine.

8. A pick-up according to claim 7 characterised in that the frictional film is a high molecular weight polyethylene-based material.

9. A pick-up according to any one of claims 1 to 8 characterised in that there is provided at least one electromagnetic screen (33) between the rotary transformers.

10. A pick-up according to claim 9 characterised in that the electromagnetic screen (33) is formed by an intermediate layer of one (28) of the detection discs, produced as a multi-layer printed circuit.

11. A pick-up according to any one of claims 1 to 10 characterised in that one at least of the rotary transformers (20A, 27, 28, 20B) is of voltage-increasing type.

12. A pick-up according to claim 11 characterised in that the voltage-increasing transformer (20A, 27) comprises a secondary winding arrangement formed by the series connection of a first winding (29a) carried by one of the faces of the disc (27) and a second winding (29b) formed by an intermediate layer (37) of the same disc, in the form of a multi-layer printed circuit.

13. A pick-up according to any one of claims 1 to 12 characterised in that the series connections for the detection coils (30A, 30B) are disposed on one of the faces of the detection discs (27, 28) having a winding (29A, 29B) forming a rotary transformer winding arrangement.

**FIG.1**

FIG.2

FIG.5

3

FIG.3A  FIG.3B  FIG.4A  FIG.4B

FIG.6

Fig 7

Fig 7A

Fig8C

Fig8B

Fig 8A

Fig9C

Fig9B

Fig 9A

9